# EUROPEAN PATENT APPLICATION

(11) **EP 3 026 184 A1**
(43) Date of publication of application: **01.06.2016**
(21) Application number: 15153909.5
(22) Date of filing: 05.02.2015
(51) Int. Cl.: E03F 7/02, E03C 1/298, F16K 15/03

(54) **A VALVE ASSEMBLY**

(30) Priority: 28.11.2014 IN CH59832014
(71) Applicant: Ashirvad Pipes Private Limited, Bangalore 562 107 KRN (IN)
(72) Inventor: Poddar, Varun, 560 103 Bangalore (IN)
(74) Representative: Grünecker Patent- und Rechtsanwälte PartG mbB

(57) **Abstract**

The present disclosure provides a valve assembly. The valve assembly comprises a flap (105) connectable onto an opening of a passage, wherein the flap (105) is configured to move between a closed position (112) and an open position (113). The flap (105) comprises a first plate (105a) hinged on the opening; and a second plate (105b) hinged to the first plate (105a), wherein the second plate (105b) is configured to move independent of the first plate (105a).

## Description

### TECHNICAL FIELD

The present disclosure generally relates to a plumbing system. Particularly, but not exclusively, the embodiments of the present disclosure relates to a valve assembly for drain pipes.

### BACKGROUND OF THE DISCLOSURE AND PRIOR ARTS

Conventionally, water which drains from a sink or basin, such as a restroom sink, kitchen sink, travels through the drain opening of the sink and empties into under sink piping which directs the water from the sink into the building's waste water system.

The waste water exiting out from the sink sometimes might backflow due to clogging of the sink piping. The clogging in the sink piping may happen due to entrapping of dirt due to prolonged usage or due to entrapment of insects in the piping. The clogging in the sink piping does not allow the flow of waste water out of the sink piping system and creates backflow of the water into the sink/basin. Also, the clogging in the sink pipe generates foul air in the sink pipe. Sometimes, it is also faced commonly that insects such as cockroaches and other insects enters the drain piping system and thereafter to sink/basin. In order to maintain personal hygiene in the bathrooms and kitchens, it is very important to restrain the backflow of waste water, foul air, and insects coming from the sink piping to the sink/basin. For overcoming the problems mentioned above in the sink piping system, there exists a plethora of systems and methods.

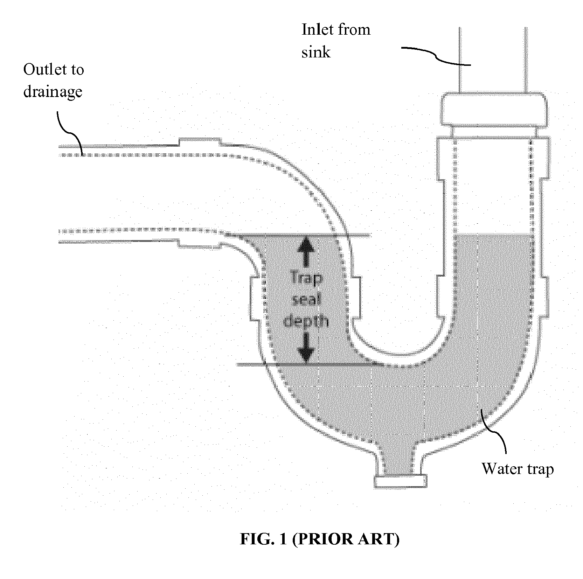

One way to overcome the aforesaid problems is made in an existing system which consists of a water seals or water trap seal. The water seals can be a U-shaped water trap seals or bottle trap seals. Fig. 1 illustrates a U-shaped water trap seal. The water trap seals prevent entry of foul air from sink pipe to the sink/basin and thereafter entering the house. Also, the water trap seals partially prevent entry of insects from the sink pipe to the sink/basin. The limitation associated with the water trap seal is that the entry of insects is not permanently prevented because, sometimes, the insects can swim across the water seal. Also, the water trap seals may break due to low pressure in the flowing lines that suck the water out of the seal or due to evaporation of water. Due to the breakdown of the water trap seals, a free passage is created in the sink pipe through which the insects may easily pass through the sink pipe and may enter the sink/ basin. Thus the aforementioned problem is not fully addressed by this system and hygiene environment is not maintained.

Another way to overcome aforesaid limitations is provided in an existing system consisting of sink drain pipes with a spring loaded/based non-return valves. The non-return valves are provided at drain-port or in the vertical flow channel of the sink pipe. Such non-return valves opens when the ingredients or waste water flow from the sink to the drainage and closes once the flow of ingredient ceases from the sink due to spring force. The limitations associated with such arrangements are that, the ingredients/waste water clog at hinge points of the non-return valves, thereby causing malfunction of the non-return valves. Also, in the spring based non-return valves, the spring force may reduce due to prolonged usage. Hence, there are chances of malfunctioning of the non-return valve due to reduced spring force.

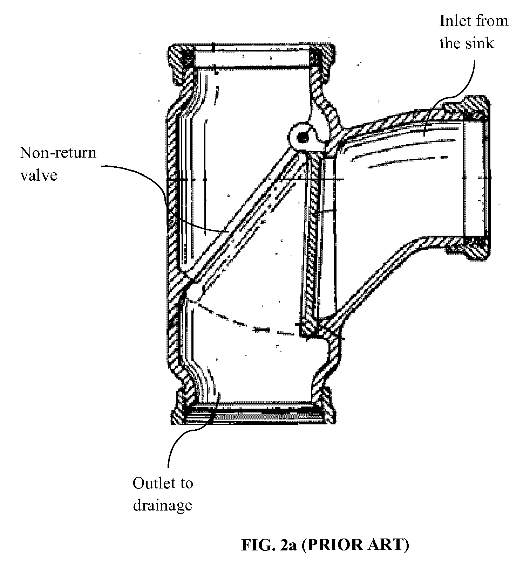

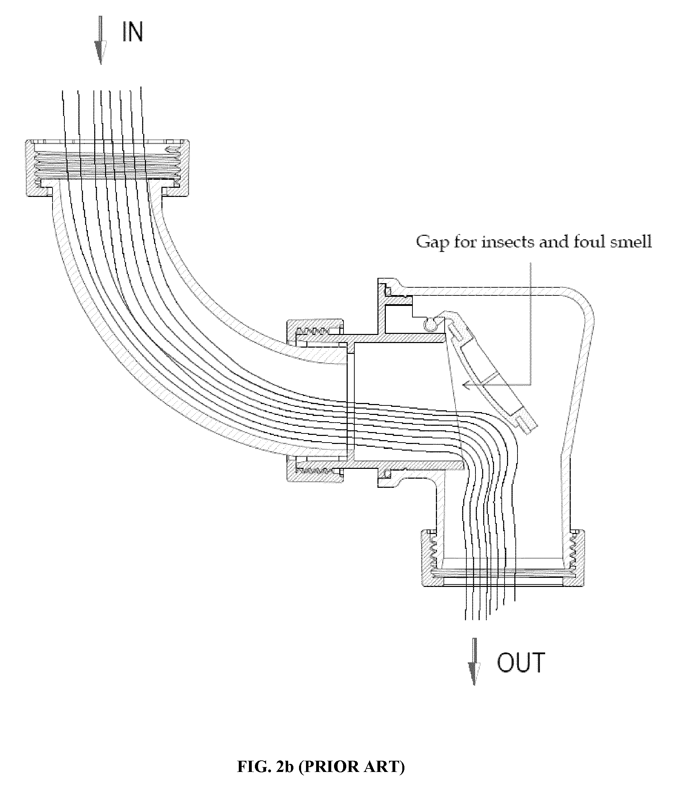

One type of non-return valve used in sink drain pipes is disclosed in US Patent number 2,225,840 (hereinafter referred as '840 patent). The non-return valve as shown in FIG. 2a of '840 patent consists of passages in which a flap valve is pivotally positioned. The limitation associated with the non-return valve is that entire flap valve moves to the open position even when small quantity [shown in FIG. 2b] of waste water or ingredients flows through the inlet pipe. Due to complete movement of non-return valve, a room for entry of foul air and insects into the sink drain pipe is not prevented. Also, the flap valve is mounted in vertical oriental inside the valve body and there are chances that the valve may not be held in closed position when there is no waste water flow or ingredients from the sink/basin to the sink pipe.

In light of the foregoing discussion, it is necessary to develop a valve assembly for a drain pipe to overcome the one or more problems stated above.

### SUMMARY OF THE DISCLOSURE

The shortcomings of the prior art are overcome and additional advantages are provided through the provision of system as claimed in the present disclosure.

Additional features and advantages are realized through the techniques of the present disclosure. Other embodiments and aspects of the disclosure are described in detail herein and are considered a part of the claimed disclosure.

In one non-limiting embodiment of the present disclosure a valve assembly is provided. The valve assembly comprises a flap connectable onto an opening of a passage, wherein the flap is configured to move between a closed position and an open position. The flap comprises a first plate hinged on the opening; and a second plate hinged to the first plate, wherein the second plate is configured to move independent of the first plate.

In an embodiment of the present disclosure, the flap is positioned in at least one of vertically and at a predefined inclined angle onto the opening.

In an embodiment of the present disclosure, the flap is configured to move from the open position to the closed position due to gravity.

In an embodiment of the present disclosure, the first plate along with the second plate moves from the closed position to the open position when large quantity of ingredients flows through the opening. Further, the second plate moves from the closed position to the partially open position when small quantity of ingredients flows through the opening.

In an embodiment of the present disclosure, the opening comprises a rubber seal to form a sealing with flap in the closed position.

In an embodiment of the present disclosure, the second plate is configured with a plurality of plates. Each of the plurality of plates of the second plate are hinged adjacent to each other.

It is to be understood that the aspects and embodiments of the disclosure described above may be used in any combination with each other. Several of the aspects and embodiments may be combined together to form a further embodiment of the disclosure.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING FIGURES

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
FIG. 1 illustrates sectional view of water trap seal provided in a sink/basin according to the prior art.
FIG. 2 illustrates sectional view of flap valve for the sink drain pipes according to the prior art.
FIGS. 3a and 3b illustrates perspective view, and side view of the valve assembly in accordance with an embodiment of the present disclosure.
FIG. 4 illustrates a perspective view of a sink drain pipe equipped with a valve assembly of FIGS. 3a and 3b in accordance with an exemplary embodiment of the present disclosure.
FIG. 5 illustrates sectional view of the sink drain pipe of FIG. 4 with one valve assembly in a closed position
FIGS. 6a and 6b illustrates sectional views of the sink drain pipe of FIG. 4 in partially opened position and fully opened position respectively according to an exemplary embodiment of the present disclosure.
FIG. 7 illustrates a perspective view of the sink drain pipe in accordance with another exemplary embodiment of the present disclosure.
FIG. 8 illustrates a sectional view of the sink drain pipe of FIG. 6 with plurality of valve assemblies.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

The foregoing has broadly outlined the features and technical advantages of the present disclosure in order that the detailed description of the disclosure that follows may be better understood. Additional features and advantages of the disclosure will be described hereinafter which form the subject of the claims of the disclosure. It should be appreciated by those skilled in the art that the conception and specific embodiment disclosed may be readily utilized as a basis for modifying or designing other structures for carrying out the same purposes of the present disclosure. It should also be realized by those skilled in the art that such equivalent constructions do not depart from the spirit and scope of the disclosure as set forth in the appended claims. The novel features which are believed to be characteristic of the disclosure, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

To overcome the drawbacks mentioned in the background, the present disclosure provides a valve assembly for drain pipes such as but not limiting to sink drain pipe. The valve assembly comprises a flap which is pivotable onto an opening of a passage or a channel. The flap is configured into a plurality of flap plates which are in turn connected to each other by a means of a plurality of hinges sequentially. The flap segments or flap plates are hinged in such a manner that the flap segments opens the passage or the channel due to flow of ingredients through the passage or channel and closes the passage or channel after the fluid flow due to gravity.

In the exemplary embodiment of the disclosure, the valve assembly is used in drain pipes such as but not limiting to the sink drain pipe. The sink drain pipe according to embodiment of the present disclosure comprises an inlet pipe connectable to an outlet section/drain port of the sink. One end of the inlet pipe is integrated to a housing member of the sink drain pipe. The housing is provided with an outlet which is connectable to drainage for exiting the water from sink to the drainage. The valve assembly is provided within the housing. The valve assembly is alternatively referred as a non-return valve and is provided in one or more locations in the drain pipe for preventing the backflow of water, entry of insects and entry of foul air into the sinks. The non-return valve comprises a flap which acts a mechanical seal. The flap is hinged to an inlet pipe onto opening in the housing such that the flap swings between an open position and a closed position due to flow of waste water or the ingredients. The term "opening" herein refers to a passage from which the ingredients (waste water) flow from sink to drainage. The valve assembly is configured at the end of the inlet pipe, such that the valve assembly closes when the water flow from the inlet pipe stops. In one embodiment, the flap is hinged to the housing at first hinge point, wherein the first hinge point lies above the flow path of waste water or ingredients. This prevents clogging of the waste water or ingredients at the hinging point. In alternative embodiment of the present disclosure, the drain pipe may comprise one or more additional non-return valves inside the housing before the exit of the drain water. Thus, the additional non-return valve increases the effectiveness to improve hygiene by resisting against backflow of waste water or ingredients of foul air into the sink/basin.

In one embodiment of the present disclosure, the flap may be configured as two piece flap, having a first plate and a second plate. The first and the second plates are connected to each other by a hinge such that the first plate is hinged to housing at the first hinge point and the second plate is hinged to the first plate at the second hinge point. This configuration of the flap facilitates to prevent the opening of the entire flap even though a small quantity of waste water or ingredients flow from the sinks through the sink pipe. The flap opening is proportional to the flow of the fluid or waste water or foul air existing out from the drain pipe. Thus, the feature of proportional opening of the flap prevents entry of insects into the sink/basin.

The term "small quantity" of ingredients referred herein may be defined as a specific quantity of the waste water or ingredients is a level of inside the drain pipe up to which the waste water or ingredients can smoothly flow only through the second plate without opening the first plate of the flap. The term "large quantity" of ingredients or waste water may be defined as a quantity of ingredients or waste water which moves the first plate. The quantity of ingredients which can pass through the second plate depends on the configuration of the second plate. In various embodiments of the disclosure, the second plate can be configured with varying designs including but not limiting to geometric shape such as semi-circular, or in chord segment design and non-geometric shape as well. The second plate may also be configured to open only to a predetermined extent to allow the flow of small quantity of ingredients by providing a stopper at the flap.

Henceforth, the present disclosure is explained with the help of one or more exemplary embodiments in conjunction with the drawings. However, such exemplary embodiments should not be construed as limitations of the present disclosure. A person skilled in the art can envisage various such embodiments without deviating from scope of the present disclosure. Further, in the foregoing description, the valve assembly is explained with an example of sink/basin drain pipe. However, one should not consider the same as limitation to the present disclosure. The valve assembly can be used in any other suitable applications apart from sink/basin drain pipe.

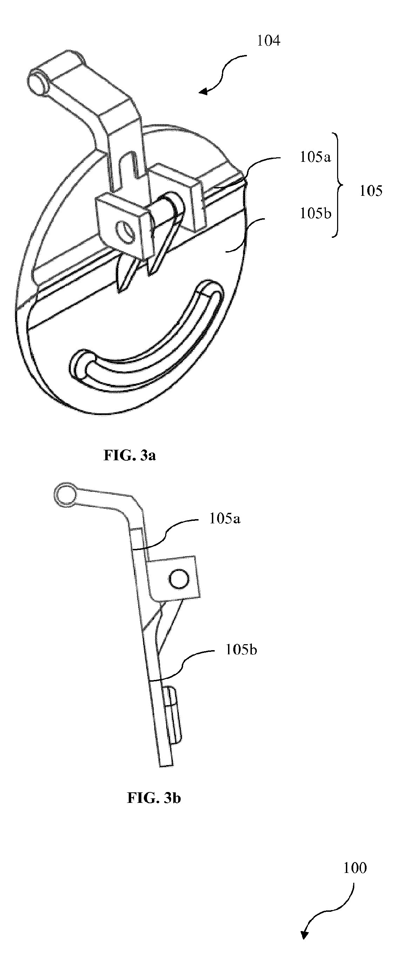

FIGS. 3a and 3b are an exemplary embodiment of the present disclosure illustrating a perspective view and side view of a valve assembly (104). The valve assembly (104) comprises, a flap (105) pivoted to an opening (111) of a passage or a channel. In one embodiment, the flap (105) is configured into a plurality of flap segments or plates which are in turn connected to each other by a means of a plurality of hinges sequentially. The flap segments are hinged in such a manner that the flap segments opens the passage or the channel due to flow of waste water or ingredients or fluid through the opening (111) and closes the opening (111) after the flow of waste water or ingredients or fluid due to gravity.

In one embodiment, the flap (105) is configured in a shape such as but not limited to geometric shapes viz. circular, polygonal and non-geometric shapes. In an exemplary embodiment, the flap (105) is configured to have two flap segments, wherein the flap segment which is hinged onto opening (111) in the channel is a first plate (105a) and the flap segment which is hinged to the first plate is a second plate (105b). The second plate (105b) is configured to individually to move from a closed position (112) up to a partially opened position (114) depending on the amount of ingredients flowing through the opening. The flap (105) is oriented in substantially vertical i.e. inclined at a predetermined angle with respect to the ground or floor for closing the opening due to gravity when there is no flow of waste water or ingredients through the passage or channel. Further, the first plate (105a) of the flap (105) is configured with a heavier mass when compared to the second plate (105b) which enables the opening of the only second plate (105b) when small quantity of ingredients flows through the opening (111). Thus, the closing of the opening (111) is an immediate reflex action when there is no flow of ingredients or waste water through the drain pipe. In an embodiment of the disclosure, the second plate (105b) comprises a mass which enables the movement of second plate (105b) from the partial open position (114) to the closed position (112) due to gravity.

In one embodiment, the first plate (105a) along with the second plate (105b) moves from the closed position (112) to the open position (113) when a large quantity of ingredients flow through the opening (111). The second plate (105b) moves from the closed position (112) up to a partially opened position (113) when a small quantity of ingredients flow through the opening (111). In an embodiment of the disclosure, the second plate (105b) independently opens up to the partially open position (114) proportional to the amount of water flowing though the opening (111), and in partially open position (114) the second plate (105b) will be in fully open condition. In one embodiment, the opening (111) is configured with a seal made of polymer to form a sealing with the flap (105) in the closed position (112).

In one embodiment, the channel is but not limited to sink drain pipe, basin drain pipe, or similar kind of plumbing system in which drain water or waste water is allowed to pass through and exited.

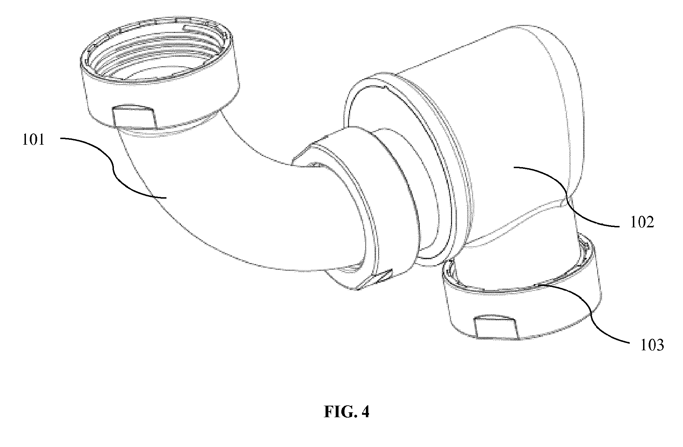

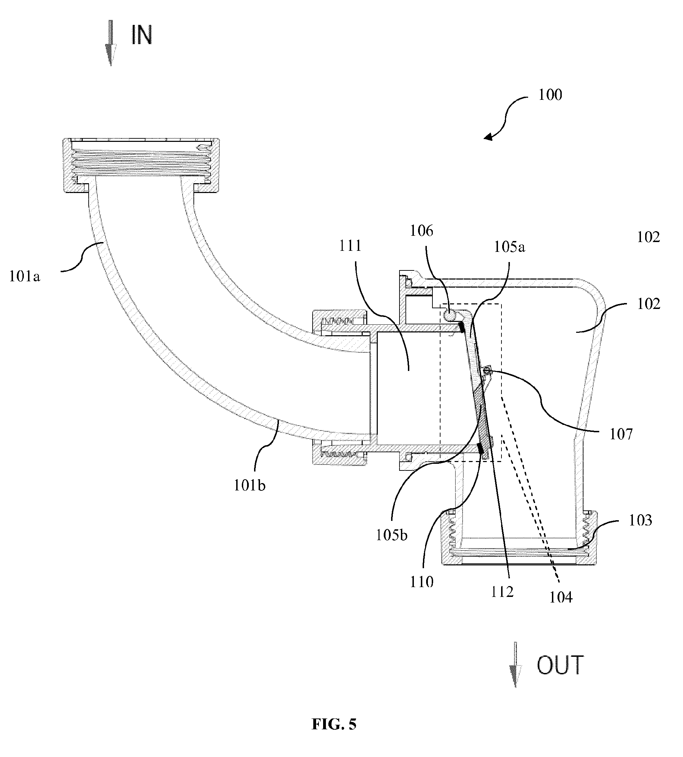

FIGS. 4 and 5 are exemplary embodiments of the present disclosure illustrating perspective view and sectional view of a drain pipe such as but not limiting to the sink drain pipe (100) employed with the valve assembly (104) of FIG. 3a. In the sinks, outflow from the drain is first taken down vertically and then turned horizontally to go to the drainage. Thus, in the modern sinks or basins, sink drain pipe (100) are generally provided between drain port of the sink and a drainage pipe for exiting waste water or ingredients from the sink. The sink drain pipe (100) can be configured in any desired shape and size based on the requirement to fit between the sink and the drainage pipe. The additional requirement of the sink drain pipe (100) is that, it should prevent backflow of waste water or ingredients into the sink from the drain pipe, and also it should prevent the entry of foul air, insects and other foreign matters into the sink to maintain hygiene conditions in the building and comfort of the occupants of the building. As shown in FIG. 4, the sink drain pipe (100) according to an embodiment of the present disclosure comprises an inlet tube or pipe (101). The inlet pipe is fluidly connectable to a drain port (not shown) of a sink/basin (not shown). In one embodiment, the inlet pipe (101) is configured with a first portion (101a) followed by a second portion (101b). The first portion (101a) of the inlet pipe (101) is substantially vertical with respect to the ground, which is connectable to the drain port of the sink/basin. The second portion (101b) of the inlet pipe (101) is a substantially horizontal with respect to the ground, which follows the first portion (101a). The word 'substantially horizontal' used herein refers that the second portion of the inlet pipe is horizontal, but the second portion of the inlet pipe may be configured with certain degree of deviation from horizontal plane of the ground. The word 'substantially vertical' used herein refers that the first portion of the inlet pipe is vertical, but the first portion of the inlet pipe may be configured with certain degree of deviation from vertical plane of the ground.

Further, the sink drain pipe (100) comprises a housing (102) adjoining the second portion (101b) of the inlet pipe (101). In an embodiment of the disclosure, the second portion (101b) of the inlet pipe (101) is integrated to the housing (102) of the sink drain pipe (100). The housing (102) comprises an outlet port (103) fluidly connectable to a drainage pipe for exiting the waste water or ingredients from the sink to the drainage. In an embodiment, the outlet port (103) is provided with threads for connecting with joining members of the drainage pipe. In an embodiment, the housing (102) may be provided with one or more passages [not shown] with threads to access the housing (102). Each of the passages can be closed by a cap which can be opened and closed for cleaning the housing (102). As shown in FIG. 3, a valve assembly is provided inside the housing (102) and near the opening (111), of the channel in the housing (102) for preventing the backflow of waste water or ingredients or entry of insects and foul air into the sink. The valve assembly in the present disclosure is alternatively referred as a non-return valve (104). The non-return valve (104) acts as a mechanical seal between the inlet pipe (101) and the housing. The non-return valve is in the form but not limiting to flap (105). The flap (105) is hinged between the housing (102) and the second portion (101b) of the inlet pipe (101) such that the flap (105) swings between closed position and open position to allow the flow of ingredients or waste water from the sink to the drainage. In an embodiment of the disclosure, the valve assembly (104) is hinged onto the opening (111) in the housing (102). The flap (105) of the non-return valve (104) is closed due to gravity when the flow of water ceases from the sink.

As shown in the FIG. 5 the flap (105) is configured in an inclined position to facilitate effective closing of the opening by the flap (105) when the water flow stops or ceases from the sink to the housing (102) by the gravity force. In an embodiment of the present disclosure, the angle of inclination of the inclined position of the flap ranges from about 5 degrees to 45 degrees. However, one should not consider that the present disclosure is limited to flap (105) with inclination. The person skilled in the art may design a flap (105) without inclination also.

In an embodiment, the non-return valve (104) is provided at the opening (111) of the inlet pipe (101) i.e. after the second portion (101b), such that the non-return valve (104) moves to the closed position due to gravity. The non-return valve (104) opens when the ingredients flow from sink through the inlet pipe (101) and closes due to gravity when the flow of ingredients ceases. In an embodiment of the disclosure, the ingredients are such as but not limiting to waste water and other waste matters. The non-return valve (104) comprise of flap (105) which is hinged at the top surface to at least one of the housing (102) and the end of the second portion (101b) of the inlet pipe (101). The flap (105) is configured to be moved between the closed position (112) and the open position (113) for allowing the flow of water from sink drainage. The flap (105) is hinged to the housing at first hinge point (106), wherein the first hinge point (106) lies above the flow path of water i.e. above the opening (111). This prevents clogging at the hinge point (106). In addition, since the hinge point is not in flow path of water, it avoids rusting, wear and tear and provides long life to the moving part, which is the hinge. As the non-return valve (104) closes due to gravity when the flow ingredients cease from the sink, it prevents the backflow of waste water from the drainage pipe to the sink. Further, the valve assembly/non-return valve (104) prevents the entry of foul air and insects into the sink thereby helps to maintain hygiene condition in the building. In an embodiment of the disclosure, a polymer seal (110) also referred as rubber gasket is provided in at end of the opening (111). The rubber gasket acts as a sealant between the flap (105) and a flap resting portion in the housing (102) or the inlet pipe (101) when the flap (105) is in closed position (112).

In one embodiment of the present disclosure, the mechanical seal i.e. flap (105) may be configured in a plurality of pieces [more clearly shown in FIG.3]. As an example, the flap (105) is configured in two parts also called as two plates i.e. first and second plates (105a and 105b). The first plate (105a) and the second plate (105b) are arranged one below the other such that, the first plate (105a) is hinged to at least one of housing (102) and the inlet pipe (101), at first hinge point (106) and the second plate (105b) is hinged to the first plate (105a) at the second hinge point (107). Hence, the second plate (105b) can be individually moved from a closed position (112) up to partially open position (114) when a small quantity of ingredients flow in the inlet pipe (101). In one embodiment of the present disclosure, the first plate (105a) and the second plate (105b) are hinged at the first and second hinge points (106 and 107) using at least one of pins, rod, and any other means which serves the purpose. This particular assembly of the flap (105) helps to prevent the opening of the entire flap (105) when there is a flow of small quantity of ingredients from the sink, thus, prevents the entry of insects in the open space in the channel of the housing. Further, the entire flap (105) i.e. first and second plates (105a and 105b) moves from the closed position (112) to the open position (113) when a large quantity of ingredients flow in the inlet pipe (101). In an embodiment of the disclosure, the second plate (105a) is configured with heavier mass when compared to the first plate (105a). This ensures that the flap (105) can return to the closed position (112) when the flow of ingredients from the inlet pipe (101) ceases.

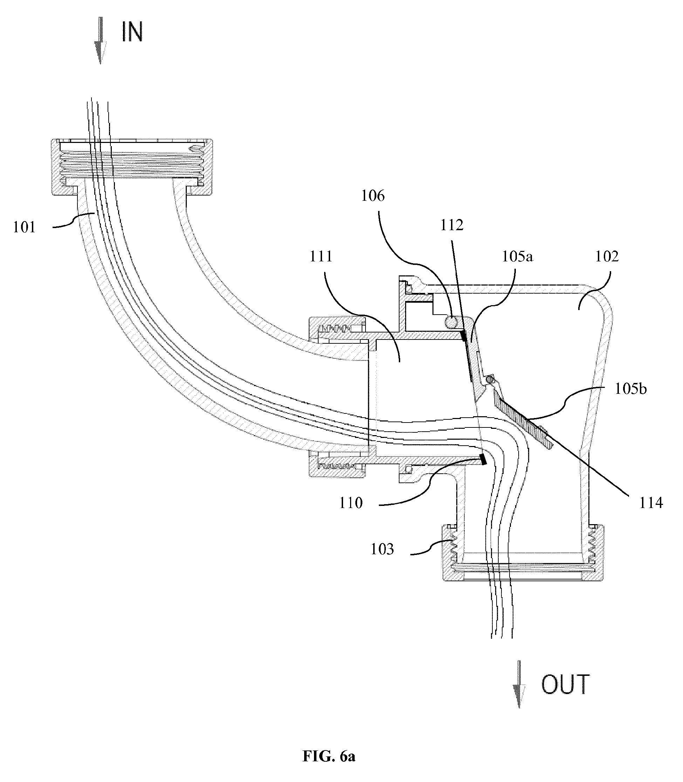

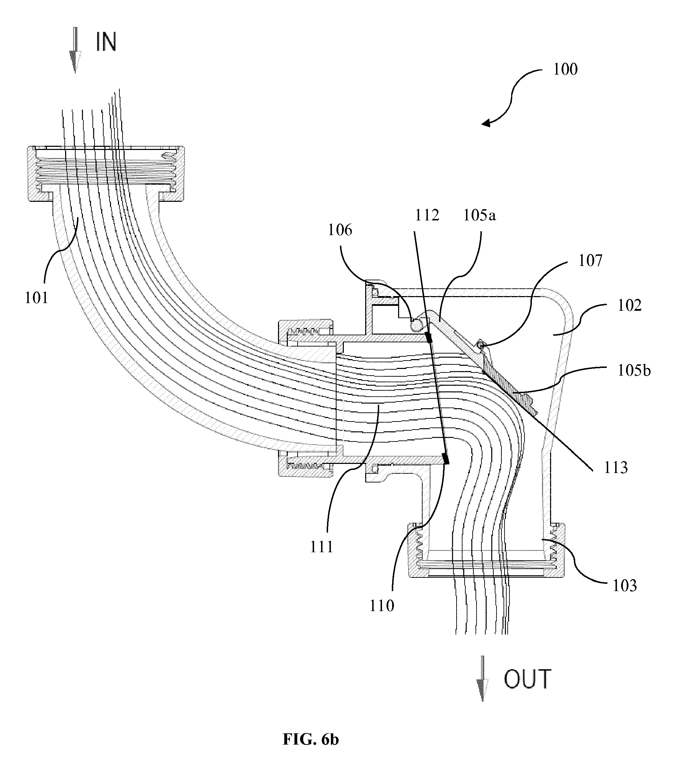

FIGS. 6a and 6b are exemplary embodiments of the present disclosure illustrating sink drain pipe (100) comprising the valve assembly (104) in partially opened position (114) and complete open position (113) respectively. When the ingredients flow from the sink to the inlet pipe (101), the non-return valve (104) opens to allow the flow of ingredients into the drainage. The non-return valve (104) is configured to operate depending on the quantity of the ingredients. In other words, if a small quantity of ingredients is flowing through the inlet pipe (101), the second plate (105b) of the flap (105) individually moves from the closed position (112) up to the partially opened position (114) [shown in FIG. 6a] to allow the flow of ingredients to the housing (102). This particular configuration of the flap (105) helps to prevent the opening of the entire flap (105) when there is a flow of small quantity of ingredients from the sink, thus, prevents the entry of insects in the open space. When, the large quantity of the ingredients are flowing through the inlet pipe, the entire flap (105) i.e. both the first and second plates (105a and 105b) moves from the closed position (112) to the open position (113) to allow the flow of ingredients through the housing (102) [as shown in FIG.6b] from the sink to the drainage. When the water flow ceases from the sink, the flap (105) is moved down due to action of gravity and rests on the seating face or resting portion to prevent the entry of insects or foul air or backflow of waste water into the sink.

In an exemplary embodiment of the disclosure, the second plate (105b) is configured with a plurality of plates, and each of the plurality of plates of the second plate (105b) is hinged adjacent to each other. In other words, the second plate (105b) is divided into multiple pieces, and is arranged one below the other by hinging one piece with the adjacent piece. This will help to control the opening of the second plate (105b) based on the quantity of water flowing through the sink drain pipe (100).

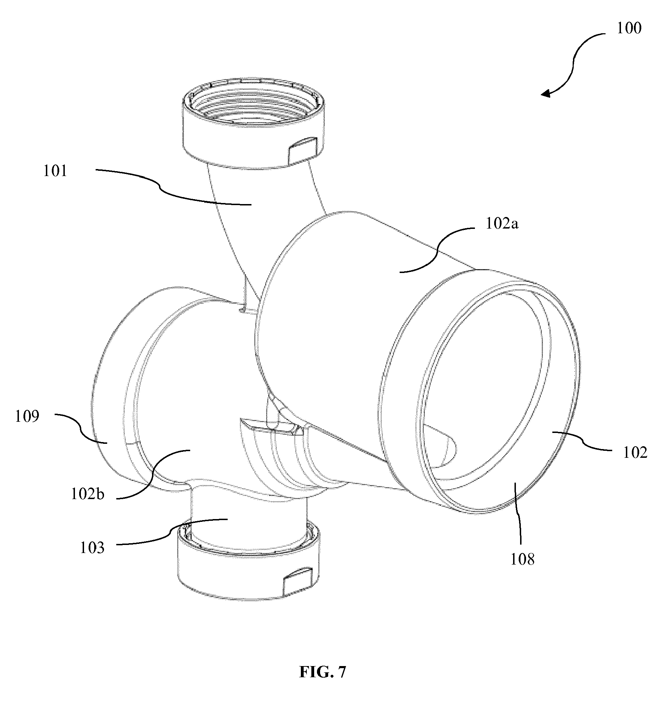

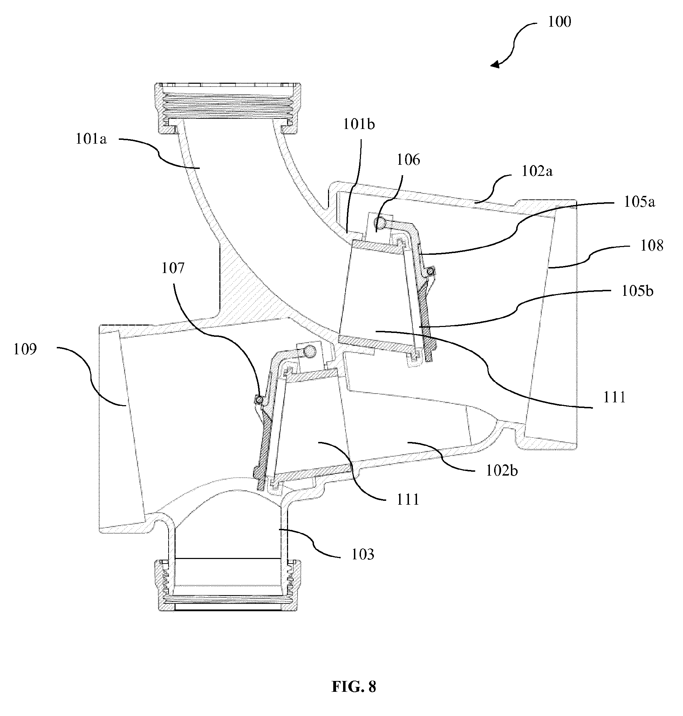

FIGS. 7 and 8 illustrates another exemplary embodiment of the present disclosure illustrating a perspective view and sectional view of the sink drain pipe (100) with plurality non-return valves (104). As shown in FIG. 7 the sink drain pipe (100) comprises two non-return valves (104) inside the housing (102) before the exit of the drain water/ingredients to the outlet port (103). The housing (102) comprises a first section (102a) to accommodate one non-return valve and a second section (102b) to accommodate another non-return valve. The additional non-return valve increases the effectiveness to improve hygiene by resisting against backflow of waste water or ingredients of foul air into the sink/basin. The housing (102) comprises two passages (108) provided with threads, and a cap (109) is provided which can be threadingly connectable to enclose the passages. The caps (109) can be removed to access the non-return valves (104) for service and maintenance.

When the ingredients flow from the sink to the inlet pipe (101), the non-return valve (104) which is provided at the end of the inlet port (101) opens first depending on the quantity of the ingredients. In other words, if large quantity of the ingredients are flowing through the inlet pipe entire flap (105) i.e. both the first and second plates (105a and 105b) moves from closed position (112) to open position (113) to allow the flow of ingredients to the housing (102). If only a small quantity of ingredients are flowing through the inlet pipe (101) the second plate (105b) of the flap (105) individually move from closed position (112) up to partially open position (114) to allow the flow of ingredients to the housing (102). The ingredients then flow towards another non-return valve (104) which is provided in the second section (102b) of the housing (102). Then another non-return valve (104) opens based on the quantity of the ingredients flowing through the housing (102). After passing another non-return valve (104), the ingredients flow to the drainage pipe through the outlet (103).

In an embodiment of the present disclosure, flaps (105) in both the non-return valves (104) is made in two pieces (105a and 105b) as shown in FIG. 5. The two plates (105a and 105b) are provided to facilitate two stage operation of the flap (105) assembly based on the quantity of indigents flowing through the inlet pipe (101). In one stage only the second plate (105a) will be moved from the closed position (112) to partially open position (114) through the second hinge point (107) when the small quantity of ingredients flows from the sink. In another stage the entire flap i.e. both the first plate (105a) and second plate (105b) move from closed position (112) to opened position (113) through the first hinge point (106) when the large quantity of ingredients flow from the sink. The two piece construction of the flap (105) helps to prevent the entry of foul air, insects into the sink. In alternative embodiment of the disclosure, flap (105) in one of the plurality of non-return valves may be a single piece flap (105), and the other flap can be two piece flaps (105). Further, one should note that the sink drain pipe provided with two numbers of non-return valves (104) is an exemplary embodiment of the disclosure, and same should not be construed as limitation of the present disclosure. The one skilled in the art can provide any number of non-return valves more than one in the sink drain pipe (100) based on the requirements. Also, the flap (105) comprising two plates also shown as exemplary embodiment of the disclosure, and the same should be construed as limitation to the disclosure. The person who is skilled in the art may provide more than two pieces in the flap and hinge one onto other based on the requirement.

In an embodiment of the disclosure, the sink drain pipe (100) is made of a material including but not limiting to plastic, ceramic, acrylic, glass, metal or any other material which serve the purpose. Also, the flap may be made of any light weight material including but not limiting to plastic, metal, and the like.

### Advantages

In one embodiment the present disclosure provides a non-return valve which is configured to onto an opening of the passage to prevent entry of foul air, insects into the opening.

In one embodiment the present disclosure provides a non-return valve which moves from closed position to open position based on the flow of ingredients, and from closed position to closed position due to gravity.

In one embodiment, sink drain pipe provided with a non-return valve opens when the waste water or ingredients flow from the sink and closes when the flow of ingredients ceases. This prevents the entry of foul air, insects into the sink or basin.

In one embodiment, the non-return valve comprises a two piece flap which will be operated based on the quantity of ingredients flow through the inlet pipe. Thus, prevents the entry of foul air, insects into the sink when small quantity of ingredients flows from the inlet pipe.

In one embodiment, the valve assembly or non-return valve is simple in construction, economical and easy to assemble.

### Equivalents:

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

**Referral Numerals:**

| **Reference Number** | **Description** |
|---|---|
| 100 | Sink drain pipe |
| 101 | Inlet pipe |
| 101a | First portion of the inlet pipe |
| 101b | Second portion of the inlet pipe |
| 102 | Housing |
| 102a | First section of the housing |
| 102b | Second section of the housing |
| 103 | Outlet port |
| 104 | Valve assembly or Non-return valve |
| 105 | Flap |
| 105a | First plate of the flap |
| 105b | Second plate of the flap |
| 106 | First hinge point |
| 107 | Second hinge point |
| 108 | Passage |
| 109 | Cap |
| 110 | Rubber seal |
| 111 | Opening |
| 112 | Closed position |
| 113 | Opened position |
| 114 | Partially opened position |

## Claims

1. A valve assembly (104) comprising:
a flap (105) connectable onto an opening (111) of a passage, wherein the flap (105) is configured to move between a closed position (112) and an open position (113);
wherein the flap (105) comprises:
a first plate (105a) hinged on the opening (111); and
a second plate (105b) hinged to the first plate (105a), wherein the second plate (105b) is configured to move independent of first plate (105a).

2. The valve assembly (104) as claimed in claim 1, wherein the flap (105) is positioned in at least one of vertically and at a predefined inclined angle onto the opening (111).

3. The valve assembly (104) as claimed in claim 1, wherein the flap (105) is configured to move from the open position (113) to the closed position (112) due to gravity.

4. The valve assembly (104) as claimed in claim 1, wherein the first plate (105a) along with the second plate (105b) moves from the closed position (112) to the open position (113) when a large quantity of ingredients flow through the opening.

5. The valve assembly (104) as claimed in claim 1, wherein the second plate (105b) moves from the closed position (112) to the partially open position (113) when a small quantity of ingredients flow through the opening (111).

6. The valve assembly (104) as claimed in claim 1, wherein the opening (111) comprises a rubber seal (110) to form a sealing with the flap (105) in the closed position (112).

7. The valve assembly (104) as claimed in claim 1, wherein the second plate (105b) is configured with a plurality of plates.

8. The valve assembly as claimed in claim 7, wherein each of the plurality of plates of the second plate (105b) are hinged adjacent to each other.

9. A drain pipe (100) comprising the valve assembly (104) as claimed in claim 1.
